# EUROPÄISCHE PATENTSCHRIFT

(11) **EP 1 695 807 B1**
(45) Veröffentlichungstag und Bekanntmachung des Hinweises auf die Patenterteilung: **13.04.2011**
(21) Anmeldenummer: 06004056.5
(22) Anmeldetag: 28.02.2006
(51) Int. Cl.: B29C 44/14, B29C 70/74

(54) **Verfahren zur Herstellung eines Schaumformteils mit Dekorbereich**
Method of making a moulded foam panel with a decorative zone
Procédé pour fabriquer une pièce moulée en mousse comprenant une zone décorative

(30) Priorität: 28.02.2005 DE 102005009603
(43) Veröffentlichungstag der Anmeldung: 30.08.2006
(73) Patentinhaber: Peguform GmbH, 79268 Bötzingen (DE)
(72) Erfinder: Luesebrink, Uwe, 79100 Freiburg (DE); Buehler, Hartmut, 79199 Kirchzarten (DE); Hess, Raul, 79183 Waldkirch (DE)
(74) Vertreter: Patentanwälte Westphal, Mussgnug & Partner

(56) Entgegenhaltungen:
- WO-A-2005/012040
- FR-A- 2 151 651
- US-A- 5 811 053

## Beschreibung

Die Erfindung betrifft ein Verfahren zur Herstellung eines Formteils gemäß Anspruch 1.

Das erfindungsgemäße Verfahren eignet sich insbesondere zur Herstellung von Formteilen für den Automobilbereich und dort insbesondere zur Herstellung von Innenraumausstattungsteilen, wie beispielsweise Instrumententafeln oder Türinnenverkleidungen. Diese Formteile weisen typischerweise einen in der Regel im Sichtbereich liegenden Dekorbereich sowie einen in der Regel im Nichtsichtbereich liegenden Nichtdekorbereich auf. Häufig besitzen solche Formteile eine komplexe Geometrie.

Solche bekannte Formteile bestehen aus einer durchgehenden, hinterschäumten PVC-Haut, die in den im Einbauzustand sichtbaren Bereichen mittels einer hochwertigen Dekorschicht, insbesondere einer Schicht aus Leder, Kunstleder, Alkantara oder Stoff, beklebt ist, Benachbart zu den im Einbauzustand sichtbaren Bereichen erstrecken sich Nichtdekorbereiche, die zumeist als Funktionsbereiche ausgebildet sind. Diese Funktionsbereiche erfüllen insbesondere eine Abstütz-, Zentrierungs- oder Fixierungsfunktion. Demnach enthalten die Nichtdekorbereiche in der Regel Anlagenflächen und/oder Zentrierungs- und/oder Fixierungsmittel zum Anbringen und/oder Fixieren von Anbauteilen.

Das Vorsehen der durchgehenden PVC-Haut ist notwendig, um die teilweise relativ komplex ausgeformten Nichtdekorbereiche darzustellen. Hochwertiges Dekormaterial wie beispielsweise Leder, Kunstleder oder Alkantara als durchgängiges Material eignet sich nicht, da es nicht in dem Maße drapierbar ist, wie dies zur Ausbildung der komplexen Geometrie im Nichtsichtbereich erforderlich wäre.

Alternativ besteht zwar die Möglichkeit, Bereiche komplexer Geometrie aus Schnittteilen, die miteinander vernäht werden, darzustellen (sogenannte dreidimensionale Lederkleider). Diese Konzept ist jedoch aufwändig und erfordert daüber hiaus eine sorgfältige Abdichtung der Nähte mittel einer Sperrschicht, um Schaumaustritt beim Hinterschäumen zu verhindern.

Zur Herstellung der bekannten Formteile wird deshalb zunächst eine PVC-Haut, meist im Rotationssinterverfahren bzw. Slushverfahren, hergestellt. Die PVC-Haut hat in der Regel eine Dicke von etwa 1 mm. In einem nächsten Verfahrensschritt wird die durchgehende PVC-Haut hinterschäumt, worauf in einem weiteren Schritt eine Dekorschicht auf die PVC-Haut aufgeklebt wird. Die Nichtdekorbereiche werden von der Dekorationsschicht ausgespart.

Nachteilig ist dabei, dass die Herstellung der PVC-Haut im Slushverfahren kosten- und zeitintensiv ist. Weiterhin ist nachteilig, dass das bekannte Formteil, auf Grund der ca. 1 mm dicken PVC-Haut, ein relativ hohes Gewicht aufweist.

Aus dem Stand der Technik sind darüber hinaus Verfahren bekannt, hochwertige Dekore, wie beispielsweise Leder oder Stoff, mit anderen Materialien zu verbinden.

Aus der DE 43 43 240 A1 oder der DE 101 40 873 A1 ist es bekannt, zwei unterschiedliche Dekormaterialien aneinandergrenzend zur Ausbildung einer Dekorschicht anzuordnen. Zu der Anbindung von Nichtdekor- oder Funktionsbereichen ist diesen Dokumenten kein Hinweis zu entnehmen.

Aus der DE 38 23 584 A1 ist schließlich ein Polsterteil bekannt, bei dem ein Stoffbezug in einer Gießform fixiert und mit einem Weichschaum hinterspritzt wird. In einem weiteren Verarbeitungsschritt wird eine Hartschaumschicht aufgebracht, an der Befestigungselemente mit angeformt sein können. Es sind keine besonderen Maßnahmen vorgesehen, den Stoff an dem Hartschaumteil zu fixieren.

Aus der WO 2005/012040 A1 ist ein Verfahren zur Herstellung eines Innenverkleidungsteils mit einem Oberflächendekor bekannt, wobei das Oberflächendekor in einem separaten Formwerkzeug hergestellt wird und anschließend in einem Schäumwerkzeug hinterschäumt wird.

Die FR-A-2151651 beschreibt ein Verfahren zur Herstellung von Sattlereiartikeln, die aus einem Schaumstoffkern und einer darüber liegenden Dekorhaut bestehen.

Der Erfindung liegt die Aufgabe zu Grunde, ein kostengünstiges Verfahren zur Herstellung eines gewichtsreduzierten Formteils vorzuschlagen.

Diese Aufgabe wird durch ein Verfahren mit den Merkmalen des Anspruchs 1 gelöst.

Vorteilhafte Ausgestaltungen der Erfindung sind in den Unteransprüchen angegeben.

Der Erfindung liegt der Gedanke zu Grunde, auf eine dicke, starre und durchgehende PVC-Haut zwischen der Dekorschicht und der Kunststoffschaumschicht zu verzichten und lediglich die Nichtdekorbereiche mit Überlappungsbereich aus einem festen bzw. fest werdenden Material auszubilden.

Erfindungsgemäß wird zunächst eine Dekorschicht in ein formgebendes Formwerkzeug eingelegt. Daraufhin wird der, bzw. werden die, Nichtdekorbereiche mit Überlappungsbereich hergestellt. Zu diesem Zweck wird in das geöffnete Formwerkzeug ein aushärtendes Material, insbesondere Polyurethan, auf bestimmte Bereiche des späteren Formteils aufgebracht, insbesondere aufgestrichen oder aufgesprüht. Zur Herstellung eines Nichtdekorbereiches wird das aushärtende Material zum Teil auf einen Flächenbereich der Dekorschicht sowie unmittelbar benachbart dazu auf einem Flächenbereich neben die Dekorschicht in die Form eingebracht. Der Flächenbereich des aushärtenden Materials auf der Dekorschicht bildet den Überlappungsbereich oder auch Befestigungsabschnitt des Nichtdekorbereichs an der Dekorschicht. Der Überlappungsbereich wird von einem Randbereich des Nichtdekorbereichs gebildet. In der Regel werden die Nichtdekorbereiche entlang des Außenrandes der Dekorschicht vorgesehen. Selbstverständlich können jedoch Nichtdekorbereiche auch zusätzlich oder alternativ an Rändern von Ausnehmungen innerhalb der Dekorschicht vorgesehen werden.

Das formbildend ausregagierende Material wird somit ohne Verwendung von Hilfsstoffen, wie z.B. Kleber oder Folien, in dem Formwerkzeug mit dem Dekor festhaftend verbunden. Hierdurch entsteht eine Haut, die Funktionsbereiche in an sich beliebig komplexer Geometrie abzubilden in der Lage ist.

Nach dem Herstellen der Nichtdekorbereiche, insbesondere nach dem vollständigen Aushärten des Materials, wird das Formwerkzeug geschlossen und die Dekorschicht und der Nichtdekorbereich in bekannter Weise mittels eines Kunststoffschaums, insbesondere eines Polyurethanschaums, hinterschäumt. Die Nichtdekorbereiche übernehmen dabei eine Abdichtfunktion des Formwerkzeugs. Der verwendete Kunststoffschaum hat eine wesentlich geringere Dichte und Härte als die Nichtdekorbereiche des Formteils.

Durch das erfindungsgemäße Verfahren wird ein Formteil erhalten, das ein wesentlich geringeres Gewicht als ein Formteil aufweist, das mit herkömmlichen Verfahren hergestellt wird, da auf eine durchgehende PVC-Haut verzichtet und damit auf eine Doppellagigkeit im Dekorbereich werden kann. Ein weiterer großer Vorteil der Erfindung besteht in der verbesserten Haptik, da unter der Dekorschicht keine dicke, starre Kunststoffschicht vorgesehen ist, so dass die Dekorschicht bei Druckeinwirkung in gewissen Grenzen nachgeben kann. Berechnungen haben ergeben, dass mittels des Verfahrens Instrumententafeln herstellbar sind, die gegenüber herkömmlich hergestellten Instrumententafeln um etwa 900 g leichter sind. Ein weiterer großer Vorteil des erfindungsgemäßen Verfahrens besteht in der Reduzierung der Herstellungs- und Investitionskosten, da auf bisher notwendige, kostenintensive Rotationssintervorrichtungen verzichtet werden kann. Das aushärtende Material zur Herstellung der Nichtdekorbereiche kann unmittelbar, ohne teuere Vorrichtungen aufgebracht werden.

In Ausgestaltung der Erfindung ist mit Vorteil vorgesehen, dass das aushärtende Material direkt, d. h. unmittelbar, ohne Hilfsstoffe wie Haftkraftvermittler oder Folien, auf den Flächenbereich der Dekorschicht aufgebracht wird. Das aushärtende Material haftet unmittelbar an der Dekorschicht.

In Weiterbildung der Erfindung ist mit Vorteil vorgesehen, dass das aushärtende Material in flüssiger Form aufgesprüht oder aufgestrichen wird. Von besonderem Vorteil ist es, wenn ein aushärtendes Material ausgewählt wird, dass in kurzer Zeit an der Atmosphäre aushärtet. Besonders geeignet zur Herstellung der Nichtdekorbereiche ist flüssiges Polyurethan. Selbstverständlich ist es jedoch denkbar andere, Reaktive oder unter Wärmeeinwirkung oder UV-Bestrahlung aushärtende Materialien, zu verwenden.

In Ausgestaltung der Erfindung ist mit Vorteil vorgesehen, dass vor dem Hinterschäumen der Dekorschicht und des Nichtdekorbereichs im geöffneten Formwerkzeug eine Versiegelungshaut auf die Dekorschicht, insbesondere auf die gesamte Dekorschicht, aufgebracht wird. Hierdurch wird vermieden, dass es zu Verfärbung der Dekorschicht, insbesondere zur Verfärbung von Leder, auf Grund von aus dem Kunststoffschaum ausdiffundierenden Substanzen kommt. Gemäß einer ersten Ausführungsform ist vorgesehen, als Versiegelungshaut eine dünne Kunststofffolie aufzubringen, insbesondere aufzuschrumpfen. Es ist jedoch von größerem Vorteil, wenn die Versiegelungshaut gemäß einer zweiten Ausführungsform ebenfalls aus einem aushärtenden Material, insbesondere aus Polyurethan, hergestellt wird. Die Versiegelungshaut sollte wesentlich dünner sein, als die Nichtdekorbereiche. Von Vorteil ist eine Dicke von etwa 0,1 mm bis 0,3 mm. Hierdurch wird eine in gewissen Grenzen flexible Versiegelungshaut erhalten und somit ein etwaiger negativer Einfluss auf die Haptik in Grenzen gehalten.

Das aushärtende Material zur Herstellung der Versiegelungshaut kann unmittelbar, d. h. ohne Zusatzstoffe, auf die Dekorschicht aufgebracht werden. Hierzu eignen sich insbesondere Sprüh- oder Streichverfahren.

Das erfindungsgemäße Formteil zeichnet sich durch ein äußerst geringes Gewicht aus, da auf eine durchgehende PVC-Haut verzichtet wurde. Die Nichtdekorbereiche, also Bereiche mit relativ komplexer Form oder relativ komplexem Aufbau, weisen meist entweder eine Anlagefläche und/oder Zentrierungs- und/oder Fixierungsmittel, etc., auf und sind an konkreten Positionen des Formteils vorgesehen und nicht über eine dicke, durchgehende Kunststoffhaut miteinander verbunden. Die Dekorschicht überlappt einen als Überlappungsbereich oder Befestigungsabschnitt bezeichneten Randbereich des Nichtdekorbereichs und ist an diesem festgelegt, so dass der Nichtdekorbereich untrennbar mit der Dekorschicht verbunden ist. Die Kunststoffschaumschicht liegt entweder unmittelbar an der Dekorschicht oder an einer äußerst dünnen Versiegelungsschicht unterhalb der Dekorschicht an. Die Versiegelungsschicht sollte, insbesondere bei der Verwendung von Leder als Dekorschicht, vorgesehen werden, um eine Verfärbung durch chemische Substanzen des Kunststoffschaums zu verhindern.

Wenn sowohl der Nichtdekorbereich, als auch die Versiegelungsschicht sowie der Kunststoffschaum aus Polyurethan bestehen, lässt sich das Formteil besonders gut recyceln.

Im Folgenden wird die Erfindung anhand von in den Figuren dargestellten Ausführungsbeispielen näher erläutert.

### Dabei zeigen:

- Figur 1: eine Einheit aus einer Dekorschicht und einem Nicht-dekorbereich,
- Figur 2: eine schematische Schnittdarstellung durch ein Formteil und
- Figur 3: eine Draufsicht auf ein als Instrumententafel ausgebildetes Formteil.

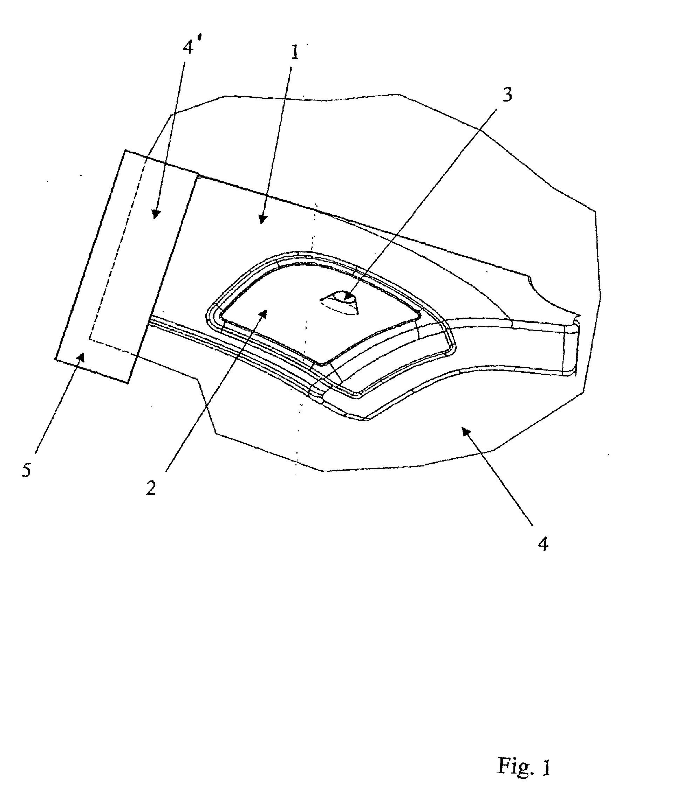

In Figur 1 ist ein aus Polyurethan hergestellter, als Funktionsbereich ausgebildeter Nichtdekorbereich 1 mit einer Anlagefläche 2 für ein Anbauteil dargestellt. Auf der Anlagefläche 2 des Nichtdekorbereichs 1 ist eine Zentriernase 3 zum Zentrieren des Anbauteils vorgesehen.

In dem in Figur 1 dargestellten Ausführungsbeispiel weist der Nichtdekorbereich 1 einen umlaufenden Überlappungsbereich 4 auf, der bei einem fertigen Formteil von einer Dekorschicht 5, im vorliegenden Fall aus Leder, bedeckt ist. Die Dekorschicht 5 ist mit dem Bereich 4' des Überlappungsbereichs 4 fest verbunden. Bei der in Figur 1 dargestellten Einheit aus Nichtdekorbereich 1 und Dekorschicht 5 handelt es sich um kein fertiges Formteil. Die gezeigte Einheit ist noch nicht hinterschäumt und es wurde zur Verdeutlichung des Aufbaus nur ein Teil 4' des Überlappungsbereich 4 mit einer Dekorschicht 5 belegt.

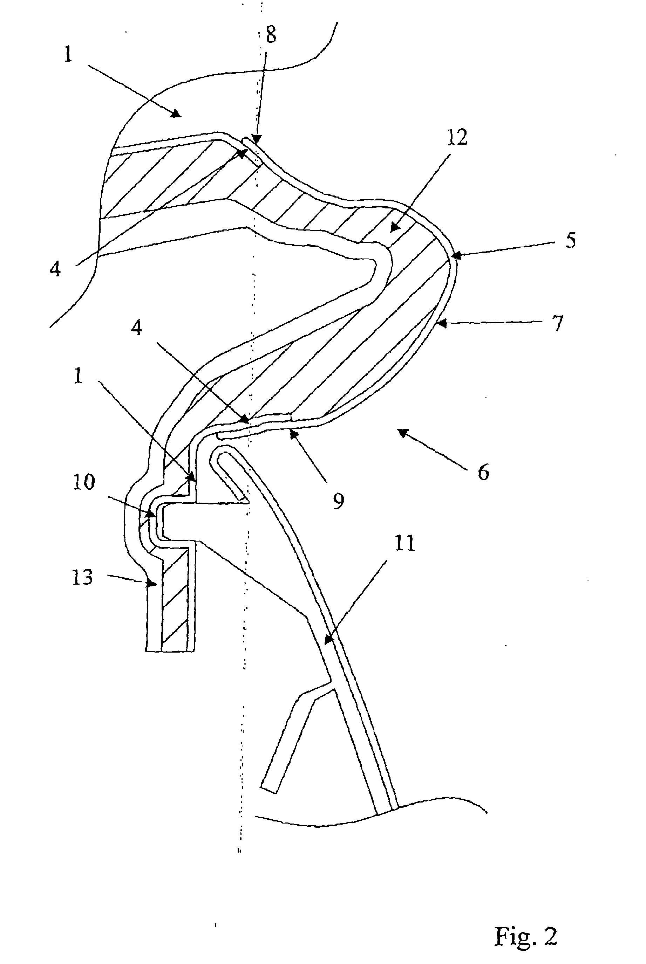

In Figur 2 ist ein fertiges Formteil 6 dargestellt. Das Formteil 6 weist an seiner Außenseite 7 eine Dekorschicht 5 aus Leder auf. In den Randbereichen 8, 9 der Dekorschicht 5 überlappt die Dekorschicht 5 die Überlappungsbereiche 4 zweier Nichtdekorbereiche 1 aus Polyurethan. Der in der Zeichenebene untere Nichtdekorbereich 1 ist als Funktionsbereich ausgebildet und weist eine Vertiefung 10 zur Klemmung eines Anbauteils 11 auf. Dieser nicht sichtbare Nichtdekorbereich 1 wird mittels des Anbauteils 11 verdeckt. Der in der Zeichenebene obere Nichtdekorbereich 1 ist als Anlagefläche für ein nicht dargestelltes weiteres Anbauteil ausgebildet.

Die Einheit bestehend aus den Nichtdekorbereichen 1 und der Dekorschicht 5 ist mittels Polyurethanschaum 12 hinterschäumt.

Das Formteil 6 ist an einen Träger 13 festgelegt. Im gezeigten Ausführungsbeispiel grenzt der Polyurethanschaum 12 unmittelbar an die Dekorschicht 5. Es kann jedoch auch vorgesehen sein, dass zwischen Dekorschicht 5 und Polyurethanschaum 12 eine dünne Versiegelungsschicht, insbesondere mit einer Dicke von 0,2 mm, vorgesehen ist, um negative Einflüsse des Polyurethanschaums 12 auf die Dekorschicht zu vermeiden.

Zur Herstellung des Formteils 6 wird die Dekorschicht 5 in ein Formwerkzeug eingelegt, woraufhin flüssiges Polyurethan in den Randbereichen 8, 9 aufgesprüht wird und zwar derart, dass die späteren Nichtdekorbereiche 1 in ihren Überlappungsbereichen 4 von der Dekorschicht 5 überlappt werden, wobei sich der eigentliche Nichtdekorbereich mit den Funktionsteilen, wie der Vertiefung 10, neben der Dekorschicht 5 befindet. Um den späteren Nichtdekorbereich 1 mit der Dekorschicht 5 zu verbinden, wird Polyurethan sowohl in einen Flächenbereich auf die Dekorschicht, als auch in einen Flächenbereich benachbart zur Dekorschicht aufgebracht. Die Dicke der Nichtdekorbereiche 1 beträgt etwa 1 mm oder mehr. Nach Aushärten des aufgesprühten Polyurethans wird die Einheit bestehend aus Dekorschicht 5 und Nichtdekorbereichen 1 mittels Polyurethanschaum in an sich bekannter Weise in dem dann geschlossenen Formwerkzeug hinterschäumt und mit dem Trägerteil 13, das vor dem Schließen in das Formwerkzeug eingelegt wurde, verbunden.

Die Nichtdekorbereiche 1 können selbstverständlich eine Vielzahl von Funktionselementen, wie Zentrierungshilfen, Fixierungsmitteln, Anlageflächen, Vertiefungen, Erhöhungen, Nuten, Durchbrüchen, etc. enthalten.

Falls die Dekorschicht 5 vor chemischen Substanzen der Polyurethanschaumschicht 12 geschützt werden soll, kann zwischen Dekorschicht 5 und Polyurethanschaum 12, vor dessen Aufbringen, eine Versiegelungsschicht, insbesondere ebenfalls aus Polyurethan, aufgesprüht werden. Diese Versiegelungsschicht sollte so dünn wie möglich ausgebildet werden, um negative Auswirkungen auf die Haptik zu vermeiden.

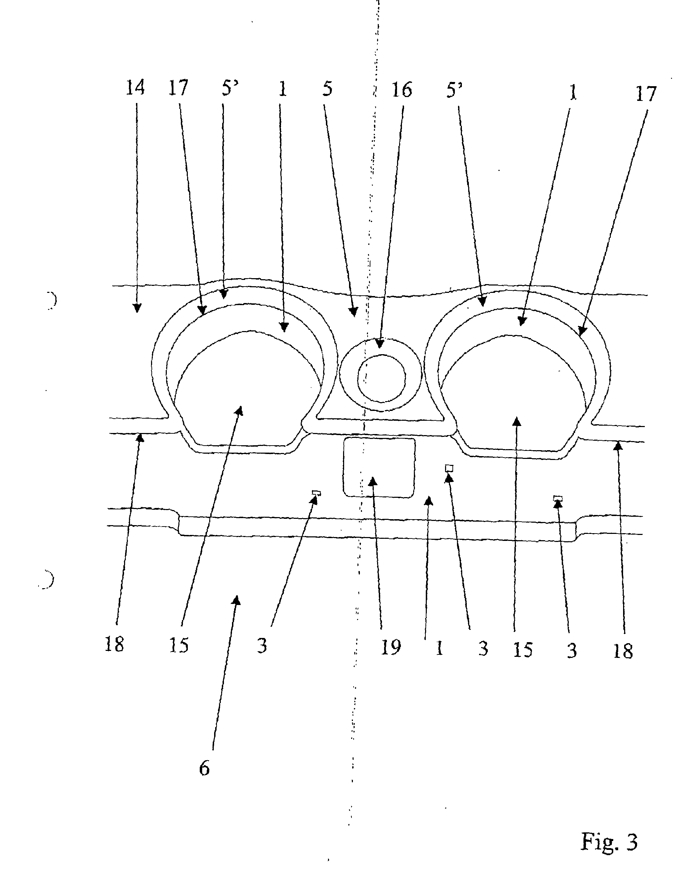

In Figur 3 ist ein als Intrumententafel ausgebildetes Formteil in einer Draufsicht dargestellt. Die Hinterschäumung ist nicht zu erkennen. Der obere, relativ flache Bereich 14 ist mit einer Dekorschicht 5, 5' versehen, wobei die Bereiche 5' der Dekorschicht 5 als Rundung ausgebildet sind und den oberen Bereich zweier Gebläseöffnungen 15 bilden. Die mittlere Vertiefung 16 ist ebenfalls von der Dekorschicht 5 umgeben und dient zur Aufnahme eins Einbauteils, beispielsweise einer Uhr.

Die schräge Dekorschicht 5' endet an den Kanten 17 im Innern der Gebläseöffnung. An die Kanten 17 schließt unmittelbar ein Nichtdekorbereich 1 an. Dieser Bereich wäre äußerst schwierig mittels der Dekorschicht 5 darzustellen. Außerdem hat dieser Bereich 1 eine Abdichtfunktion innerhalb des Formwerkzeugs beim Hinterschäumen des Formteils 6. Der Nichtdekorbereich 1 innerhalb der Gebläseöffnungen 15 dient zum Anschluss von nicht dargestellten, später anzubringenden Lüftungsrohren.

Im unteren Bereich endet die Dekorschicht 5 an der Kante 18. Unmittelbar an die Dekorschicht 5 grenzt im unteren Bereich ein als Funktionsbereich ausgebildeter Nichtdekorbereich 1 an. In diesen Nichtdekorbereich 1 sind drei Zentriernasen 3 zur Zentrierung eines Anbauteils angeformt. Weiterhin ist eine Funktionsöffnung 19 mit rechteckigem Querschnitt vorgesehen. Die Überlappungsbereiche der Nichtdekorbereiche 1 sind nicht zu erkennen, da diese von der Dekorschicht 5 in dieser Ansicht überdeckt werden.

Bezugszeichenliste
- 1: Nichtdekorbereich
- 2: Anlagefläche
- 3: Zentrierungsnase
- 4: Überlappungsbereich
- 4': mit Dekorschicht verbundener Überlappungsbereich
- 5: Dekorschicht
- 5': Bereich der Dekorschicht
- 6: Formteil
- 7: Außenseite des Formteils
- 8: Randbereich
- 9: Randbereich
- 10: Vertiefung
- 11: Anbauteil
- 12: Polyurethanschaum (Kunststoffschaum)
- 13: Träger
- 14: flacher Bereich
- 15: Gebläseöffnungen
- 16: Vertiefung
- 17: Kanten
- 18: Kante
- 19: Funktionsöffnung

## Patentansprüche

1. Verfahren zur Herstellung eines Formteils,
mit folgenden Verfahrensschritten:
a. Einlegen einer Dekorschicht (5) in ein geöffnetes Formwerkzeug;
b. Schließen des Formwerkzeugs und Hinterschäumen der Dekorschicht (5) mittels eines Kunststoffschaums, wobei durch Auftragen eines formbildend aushärtenden Materials ohne Verwendung von Hilfsstoffen, wie z.B. Kleber oder Folien, auf dem Randbereich der Dekorschicht (5) und auf einem benachbartem Flächenbereich neben der Dekorschicht (5) mindestens ein mit der Dekorschicht (5) in Randbereichen (8,9) verbundener Nichtdekorbereich (1) ausgebildet wird, wobei lediglich der Nichtdekorbereich (1) mit Überlappungsbereich aus einem festen Material ausgebildet wird, wobei der Nichtdekorbereich (1) nach dem Schließen des Formwerkzeugs zusammen mit der Dekorschicht (5) hinterschäumt wird, wobei der Nichtdekorbereich (1) als Funktionsbereich mit mindestens einem Funktionselement (3, 10) ausgebildet wird,
**dadurch gekennzeichnet, dass** die Auftragung des formbildend aushärtenden Materials vor dem Schließen des Formwerkzeugs stattfindet.

2. Verfahren nach Anspruch 1,
**dadurch gekennzeichnet, dass** das aushärtende Material direkt auf den Randbereich der Dekorschicht aufgebracht wird.

3. Verfahren nach einem der vorhergehenden Ansprüche,
**dadurch gekennzeichnet, dass** das aushärtende Material aufgesprüht oder aufgestrichen wird.

4. Verfahren nach einem der vorhergehenden Ansprüche,
**dadurch gekennzeichnet, dass** als aushärtendes Material flüssiges Polyurethan verwendet wird.

5. Verfahren nach einem der vorhergehenden Ansprüche,
**dadurch gekennzeichnet, dass** vor dem Hinterschäumen der Dekorschicht (5) und des Nichtdekorbereichs (1) eine Versiegelungshaut auf die Dekorschicht (5) aufgebracht wird.

6. Verfahren nach Anspruch 5,
**dadurch gekennzeichnet, dass** die Versiegelungshaut aus aushärtendem Material, insbesondere aus dem gleichen Material wie der Nichtdekorbereich (1), hergestellt wird.

7. Verfahren nach Anspruch 6,
**dadurch gekennzeichnet, dass** das aushärtende Material zur Herstellung der Versiegelungshaut direkt auf die Dekorschicht (5) aufgebracht wird.

8. Verfahren nach einem der Ansprüche 6 oder 7,
**dadurch gekennzeichnet, dass** das aushärtende Material zur Herstellung der Versiegelungshaut aufgesprüht oder aufgestrichen wird.

9. Verfahren nach einem der Ansprüche 6 bis 8,
**dadurch gekennzeichnet, dass** die Versiegelungshaut, zumindest über den größten Teil ihrer Flächenerstreckung, dünner hergestellt wird als der Nichtdekorbereich (1).

10. Verfahren nach Anspruch 9,
**dadurch gekennzeichnet, dass** die Viersiegelungshaut maximal 0,5 mm, vorzugsweise etwa 0,2 mm, dick hergestellt wird.

11. Verfahren nach einem der vorhergehenden Ansprüche,
**dadurch gekennzeichnet, dass** zum Hinterschäumen Polyurethanschaum verwendet wird.

12. Verfahren nach einem der vorhergehenden Ansprüche,
**dadurch gekennzeichnet, dass** als Dekorschicht (5) Leder, und/oder Stoff verwendet wird.

## Claims

1. A method of producing a moulded part
with the following method steps:
a. inserting a decorative layer (5) into an opened moulding tool;
b. closing the moulding tool and back-foaming the decorative layer (5) by means of a plastic foam,
wherein at least one non-decorative area (1) joined to the decorative layer (5) in edge areas (8, 9) is formed by the application of a material hardening in a shaped manner without the use of auxiliary materials, such as for example adhesives or sheets, to the edge area of the decorative layer (5) and to an adjacent surface area next to the decorative layer (5), wherein only the non-decorative area (1) with an overlapping area is formed from a solid material, wherein the non-decorative area (1) is back-foamed together with the decorative layer (5) after the closure of the moulding tool, wherein the non-decorative area (1) is designed in the form of a functional area with at least one functional element (3, 10), **characterized in that** the application of the material hardening in a shaped manner takes place before the closure of the moulding tool.

2. A method according to claim 1, **characterized in that** the hardening material is applied directly to the edge area of the decorative layer.

3. A method according to one of the preceding claims, **characterized in that** the hardening material is sprayed on or brushed on.

4. A method according to any one of the preceding claims, **characterized in that** liquid polyurethane is used as the hardening material.

5. A method according to any one of the preceding claims, **characterized in that** before the back-foaming of the decorative layer (5) and the non-decorative area (1) a sealing skin is applied to the decorative layer (5).

6. A method according to claim 5, **characterized in that** the sealing skin is produced from hardening material, in particular from the same material as the non-decorative area (1).

7. A method according to claim 6, **characterized in that** the hardening material is applied directly to the decorative layer (5) in order to produce the sealing skin.

8. A method according to one of claims 6 or 7, **characterized in that** the hardening material is sprayed on or brushed on in order to produce the sealing skin.

9. A method according to any one of claims 6 to 8, **characterized in that** the sealing skin is made thinner than the non-decorative area (1), at least over the greater part of the surface extension thereof.

10. A method according to claim 9, **characterized in that** the sealing skin is made a maximum of 0.5 mm, preferably approximately 0.2 mm, in thickness.

11. A method according to any one of the preceding claims, **characterized in that** polyurethane foam is used for the back-foaming.

12. A method according to any one of the preceding claims, **characterized in that** leather and/or fabric is used as the decorative layer (5).

## Revendications

1. Procédé de fabrication d'une pièce moulée comprenant les étapes de procédé suivantes :
a. mise en place d'une couche décorative (5) dans un moule ouvert,
b. fermeture du moule et expansion par l'arrière de la couche décorative (5) avec une mousse de matière plastique,
procédé selon lequel
- on réalise au moins une zone sans décor (1) reliée dans les zones de bord (8, 9) à la couche décorative (5), par application d'une matière durcissable donnant la forme sans utiliser de matières auxiliaires telles que de l'adhésif ou des films, sur la zone du bord de la couche décorative (5) et sur une zone de surface voisine à côté de la couche décorative (5),
- on réalise uniquement la zone non décorative (1) avec la zone de chevauchement en une matière ferme,
- après la fermeture du moule, on expanse en même temps derrière la zone non décorative (1) et derrière la zone décorative (5),
- on réalise la zone non décorative (1) comme zone fonctionnelle avec au moins un élément fonctionnel (3, 10),
procédé **caractérisé en ce qu'**
on applique la matière durcissable donnant la forme avant de fermer le moule.

2. Procédé selon la revendication 1,
**caractérisé en ce qu'**
on applique directement la matière durcissable sur la zone de bord de la couche décorative.

3. Procédé selon l'une des revendications précédentes,
**caractérisé en ce qu'**
on applique la matière durcissable par pulvérisation ou par enduction.

4. Procédé selon l'une des revendications précédentes,
**caractérisé en ce qu'**
on utilise comme matière durcissable du polyuréthanne liquide.

5. Procédé selon l'une des revendications précédentes,
**caractérisé en ce qu'**
avant d'expanser derrière la couche décorative (5) et la zone non décorative (1), on applique une peau de scellement sur la couche décorative (5).

6. Procédé selon la revendication 5,
**caractérisé en ce que**
la peau de scellement est un matériau durcissable, notamment la même matière que celle de la zone non décorative (1).

7. Procédé selon la revendication 6,
**caractérisé en ce qu'**
on applique directement la matière durcissable sur la couche décorative (5) pour former la peau de scellement.

8. Procédé selon l'une des revendications 6 ou 7,
**caractérisé en ce qu'**
on applique la matière durcissable formant la peau de scellement par pulvérisation ou enduction.

9. Procédé selon l'une des revendications 6 à 8,
**caractérisé en ce qu'**
sur au moins la plus grande partie de sa surface, on réalise la peau de scellement plus mince que la zone non décorative (1).

10. Procédé selon la revendication 9,
**caractérisé en ce qu'**
on réalise une peau de scellement d'une épaisseur maximale de 0,5 mm et de préférence de l'ordre de 0,2 mm.

11. Procédé selon l'une des revendications précédentes,
**caractérisé en ce qu'**
on utilise de la mousse de polyuréthanne pour l'expansion par l'arrière.

12. Procédé selon l'une des revendications précédentes,
**caractérisé en ce que**
la couche décorative (5) est du cuir et/ ou du tissu.
